Europäisches Patentamt

European Patent Office

Office européen des brevets

(11) Publication number: 0 547 320 A2

# EUROPEAN PATENT APPLICATION

(21) Application number: 92117380.3

(22) Date of filing: 12.10.92

(51) Int. Cl.5: G11B 19/02, G11B 5/09

(30) Priority: 18.12.91 IT GE910171

(43) Date of publication of application:
23.06.93 Bulletin 93/25

(84) Designated Contracting States:
AT BE CH DE DK ES FR GB GR LI LU NL SE

(71) Applicant: TECNOTOUR S.P.A.
Via Callari 16 B
I-40069 Zola Predosa, Bologna(IT)

(72) Inventor: Casoni, Massimo
23/2, Viale Repubblica
I-40127 Bologna(IT)

(74) Representative: Porsia, Attilio, Dr. et al
c/o Succ. Ing. Fischetti & Weber Via Caffaro
3/2
I-16124 Genova (IT)

(54) Equipment for driving magnetic heads designed for recording data on a magnetic medium.

(57) The equipment comprises a power driver (PWR) which supplies the head (T), which in turn is supplied at a voltage (V) made proportional to the nominal voltage of the said head and which is provided with a sensor (Rs) which detects the magnetisation current of the head. This sensor is in turn connected to a control circuit (CNT) which drives the power stage (PWR) and which receives activation commands from the outside, these commands corresponding to the direction of flow of the current in the head. When the said sensor (Rs) detects that the magnetisation current of the head has reached the nominal value, it signals this event to the control unit (CNT) which proceeds to divide the flow of the said current by the opening and reclosing at suitable frequency of the switch or switches which in the power stage (PWR) cause the said current to flow in the direction determined by the external command in the said control unit, in such a way that the said current is kept at a substantially constant value. The cancellation of the magnetisation current, when its direction has to be changed, is very rapid as a result of the known design of the equipment of the bridge type with recirculation diodes.

Fig.5

The present invention relates to equipment for driving or controlling the magnetisation current of magnetic heads designed for recording data on magnetic media.

The characteristics of such equipment and the advantages derived therefrom by comparison with the known art will be evident from the following description of a preferred embodiment of the equipment, illustrated purely by way of a non-restrictive example in the figures on the four attached sheets of drawings, in which

- Fig. 1 is an equivalent simplified diagram of a magnetic write head;
- Figs 2, 3 and 4 show three further known circuits for magnetic heads and their driving;
- Fig. 5 is a block diagram of the new equipment for driving a magnetic head;
- Fig. 6 is a possible practical embodiment of equipment constructed according to the block diagram in Figure 5; and
- Figs 7, 8, 9, 10 and 11 show the waveforms of the various signals associated with the equipment in Figure 6.

The driving of a magnetic head designed for recording data on a magnetic medium should provide the following conditions:

a) the magnetisation current of the head should reach the nominal value rapidly, and should remain at precisely this value;

b) the magnetisation current of the head should decrease rapidly when the external command is withdrawn;

c) the control system of the head should operate with a minimum power dissipation, in other words at high efficiency.

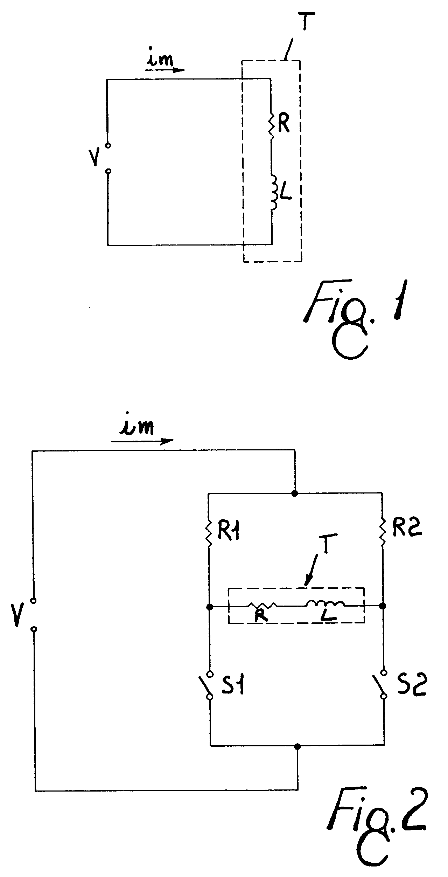

Points a) and b) may be better understood by an examination of Figure 1 which shows the equivalent simplified electrical circuit of a magnetic head, where L is the equivalent inductance of the magnetisation coil and depends on the mechanical characteristics of the head, and R is the equivalent resistance of the coil and depends on the characteristics of the electrical conductor used to form the said coil.

If a potential difference V is applied to the head T, the magnetisation current "im" in L and the relative induced magnetic flux increase according to the known law

$$im = (V/R) \cdot (1 - e^{t}/\tau)$$

where $\tau = L/R$.

For t = 0, the current "im" will be zero and will tend to increase according to an exponential law with the passage of time. A finite time "tr" will be necessary for the nominal value of "im" to be reached, and will depend on the supply voltage "V" and on the typical time constant of the head T.

A finite time will also be necessary for the cancellation of "im" when the voltage V is removed.

The control system of the head must operate in such a way that these minimum times are not further increased, since this would make the variations in residual field in the magnetic track too slow, with consequent difficulties in reading the track.

The driving current of the magnetic head must be as closely as possible equal to the nominal value declared by the manufacturer. If the magnetisation current "im" does not reach the nominal value, the magnetic field produced by this current may not be sufficient to magnetise the magnetic medium and the writing may not be carried out.

If the current exceeds the nominal value, there is an unnecessary absorption of power, and the magnetic circuit may saturate and produce electromagnetic disturbances.

Finally, point c) underlines the trend to increase the efficiency of all electronic equipment, with the aim of reducing the costs of the supply, filtering and power stages, and of reducing the external dimensions of the equipment by avoiding the use of bulky and expensive cooling devices.

The most simple equipment used in the known art for driving magnetic heads is that shown in Figure 2, which is provided with two switch devices S1-S2 normally formed by transistors. When both the components S1 and S2 are open, no current "im" flows in the equivalent inductance L of the head T.

In order to record data on a magnetic medium, it is necessary to close the switch S1 and to leave S2 open for a period determined by the coding characteristics. The current im provided by the supply voltage V passes through the impedance R2, R, L and naturally through S1, and increases according to an exponential law until it reaches the nominal current "Inom" of the head. During this time, a current from the branch in which R1 is present also passes through the switch S1, but this current produces no useful magnetic field since it does not pass through the inductance L.

Assuming that R1 = R2 = Rc, and that

1) Vnom = Inom · R (Nominal voltage of the head)

2) Pnom = R · Inom$^2$ (Nominal power of the head)

3) V = Inom · (R + Rc)

the total power dissipated by the system in Figure 2, when im reaches the value Inom, is given by

4)    $Pd = (V - Vnom) \cdot Inom + V^2/Rc + Pnom.$

It may be seen that the maximum efficiency of the system will be obtained when

$Rc = R \cdot \sqrt{2}$

so that

5)    $Pd = 5.54\ Pnom + Pnom.$

After the time required for the first coding, the second data item may be coded by reversing the direction of the current im by opening the switch S1 and closing S2. The current im will decrease exponentially to 0 and then increase exponentially with opposite sign until it reaches the value of -Inom.

The cycle will be repeated sequentially for as many times as there are data items to be coded.

The time "tr" required to enable im to reach the value of Inom in a driving system of the type shown in Figure 2 is theoretically infinite. For im = 99% Inom, the time tr is given by

6)    $tr = 4.6\ L/R.$

As may be seen, this time is independent of the supply voltage V.

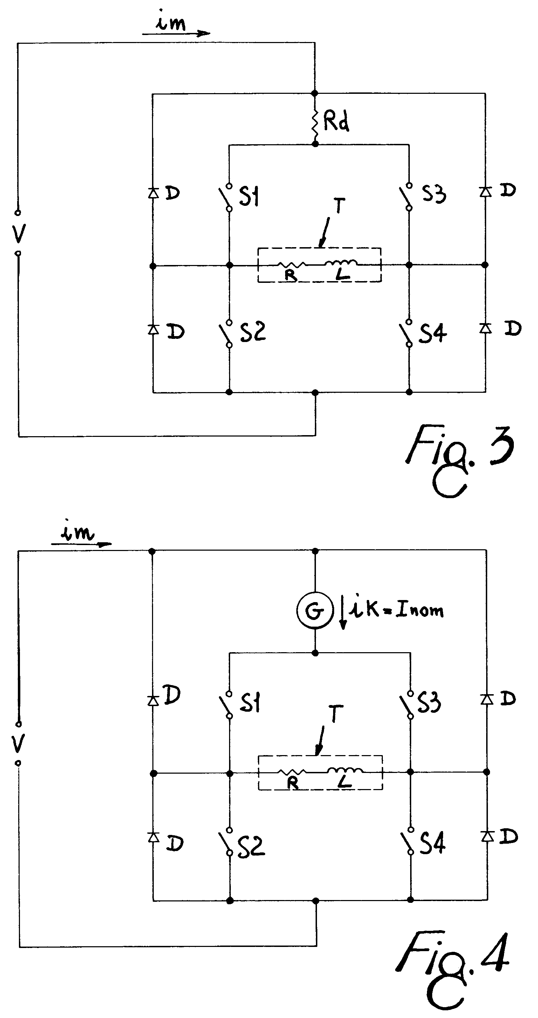

A driving system for magnetic heads, with an efficiency greater than that previously discussed and also known, is illustrated in Figure 3. This configuration, defined as the bridge type, uses four switching devices instead of two. In the rest condition, all the switches S1-S2-S3-S4 are open, and this obviously prevents the flow of current in the head. Under operating conditions, the switches S1-S4 are closed simultaneously. im flows through the head T and is stabilised at the value of Inom by the limiting resistance Rd.

As with the circuit in Figure 2, in that shown in Figure 3 it is also necessary to invert the current im periodically and this is done by closing the switches S2-S3 and simultaneously opening the switches S1-S4. To record data on the magnetic medium, the aforesaid switching is repeated cyclically.

The configuration shown in Figure 3 is clearly more complicated than that in Figure 2, partly since it requires the use of four diodes D known as "recirculation" diodes, which in the opening phase protect the switching devices S1, S2, S3, and S4, which are almost always transistors, from dangerous excess voltages generated by the inductive component of the magnetic head T. In most cases, these same diodes enable im to decrease to 0 before it changes sign and returns to the value of Inom.

If the circuit in Figure 3 is analysed in greater detail, it will be seen that relations 6) and 3) are true with respect to the build-up time of im.

A value which changes, however, is the total power dissipation of the system in Figure 3, which, when im reaches the value of Inom, is given by

7)    $Pd = (V - Vnom)\ Inom + Pnom$

which is clearly less than 4) since it does not contain the value $V^2/Rc$.

In particular, if Rd = 0, V = RInom, and consequently V = Vnom, so that

8)    $Pd = Pnom$

which means that the driving circuit in Figure 3 would theoretically have ideal efficiency, if it were not for the switching devices which always have losses, even if these are minimal.

Although ideal from the viewpoint of efficiency, the solution in Figure 3 does not enable a very rapid build-up front of im to be obtained, this being a condition which would enable the relative speed between head and magnetic medium to be increased and would enable the density of recording of the data on the said medium to be increased.

The theoretical limit of the magnetisation speed of the circuits in Figure 2 and Figure 3 is given by 6) and is independent of the parameters external to the head and associated with the command system.

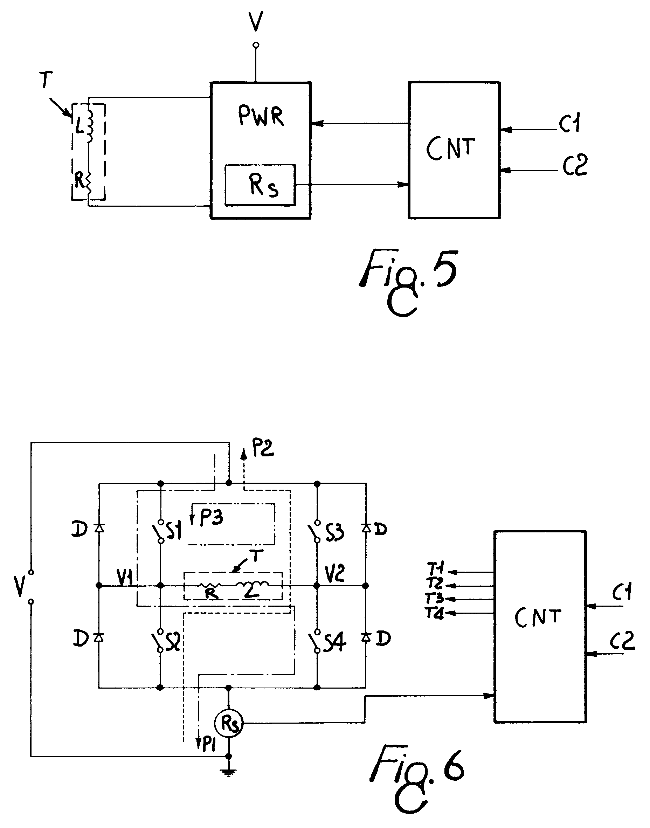

In order to avoid the disadvantage associated with the magnetisation speed, a current generator could be used in place of the resistance Rd, to limit im to the desired value, for example as in the circuit in Figure 4. In this figure, G indicates an ideal current generator Ik, with an infinite parallel impedance.

As soon as the switches of the two opposite branches of the bridge, for example S1-S4, are closed, the current generator G, which has been calibrated for a current value Inom, attempts to cause this current to flow in the winding of the magnetic head T.

The presence of the inductive component L in T is opposed to the instantaneous variation in current in the circuit, and causes the current generator G to "saturate" up to the moment at which it is unable to cause the flow in the inductance L of Inom which may be maintained for an indefinite time, G being a constant current generator.

The "saturation" of the current generator G is understood to mean that this generator is actually transformed into a voltage generator which applies to the terminals of the head T the whole voltage available to it (V) in order to cause the flow of Inom in the shortest time possible. For the circuit in Figure 4, the following equation is true:

$$9) \quad tr = \ln \frac{1}{1 - Vnom/V} \cdot L/R$$

By analysing 9) it is possible to determine that

$$10) \quad \lim tr = 0$$

$$V \to \infty$$

Assuming that V = 1.01 Vnom, it follows from 9) that tr = 4.6 L/R, which means that with a supply voltage V slightly greater than the necessary minimum Vnom, a build-up time of im comparable to the configurations in Figure 2 and Figure 3 is obtained, as indicated by the preceding equation 6). This characteristic may be further improved, however, using the same magnetic head and therefore with the values of R and L remaining the same, simply by increasing the ratio V/Vnom; for example:

11) Assuming that V = 10 Vnom, it follows from 9) that tr = 0.105 L/R, in other words a good 44 times faster than in equation 6).

The negative characteristic of the control system in Figure 4 is however the power dissipation which, when im reaches the value Inom, is expressed by the formula:

$$12) \quad Pd = (V - Vnom) \, Inom + Pnom$$

which shows that the power dissipation is the same as that in the circuit in Figure 3 (see equation 7).

It should be noted, however, that whereas with the circuit in Figure 2 the efficiency increased with a decrease in Rc and therefore in V (see equation 8) and the time tr remained unchanged, with the circuit in Figure 4 it is the case that a decrease in V reduces the dissipation but also reduces the time tr considerably (see equation 9).

Considering the example in 11), in order to have an equal increase in the transition speed, it would be necessary to withstand an increase in dissipated power such that

$$13) \quad Pd = 9 \, Pnom + Pnom$$

which, when compared with 8), shows that efficiency is sacrificed in favour of speed.

To summarise, the state of the art before the present patent application teaches that it is possible to drive magnetic heads with systems which operate at high speed, as in the example in Figure 4, or with systems having high efficiency and low power dissipation, but with reduced speed, as in the example in Figure 3.

The present patent application is intended to protect equipment which, unlike the known equipment, makes it possible to obtain a very low power dissipation combined with a high current switching speed in the magnetic head.

From the block diagram in Figure 5 it will be seen that the novel equipment for driving the magnetic head T comprises a power driver PWR supplied at a voltage V and provided with a sensor Rs which detects the magnetisation current im. The signal generated by Rs is sent to the control circuit CNT which commands the power stage PWR and also receives commands from the outside as indicated by C1 and C2.

When enabled by the external commands C1 - C2, the control circuit CNT proceeds to apply the supply voltage V to the terminals of the magnetic head T, at the correct moment and in such a way as to cause the current im to flow in the correct direction. Since the power stage PWR may be considered to be an ideal voltage generator, with a series equivalent resistance of zero, im will increase according to the following exponential law:

$$14) \quad im = (V/R) \, (1 - e^{t/\tau})$$

from which it follows that

$$15) \quad tr = \ln [1/(1 - V \, nom/V)] \cdot L/R$$

which, as may be noted, is the same as equation 9) which described the operation of the circuit in Figure 4.

The considerations mentioned in that case are therefore valid here; in other words, a control system for magnetic heads for which tr is expressed by a function such as 15) has no theoretical limit to the operating speed. Such a limit is in fact set by the ratio between the supply voltage V and the nominal voltage Vnom of the magnetic head used, a ratio which may, however, be easily modified and optimised to obtain the desired efficiency.

The way in which the circuit in Figure 5 stabilises the current im when the latter has reached the nominal value Inom will now be considered.

It should be noted that the circuit in Figure 4 included a generator G of constant current Ik which stabilised im at the value Inom, ensuring a high switching speed but causing a considerable increase in power dissipation.

In the solution in Figure 5, the power supply is provided by a voltage generator V which can ensure an equally high switching speed, but is not able to limit im, which, when it has reached Inom in the time tr, would tend to rise further, with the consequent drawbacks described previously. This disadvantage is remedied by the sensor Rs which, when it detects that im has reached the value Inom, acts on the control circuit CNT which proceeds to divide im, breaking and making at a suitable frequency the connection permitting the flow of the said current from the power source at voltage V to the head. When the connection is broken, im tends to decrease slowly as a result of the inductive component L of the head, while it tends to increase whenever the connection is remade. im thus begins to "ripple" about Inom, and if this ripple continues to be of small amplitude, so that the associated magnetisation flux also remains substantially constant, it may be asserted that

16)    im = Inom.

The control circuit CNT will have the task of acting in such a way that this condition is present, and that the amplitude of the ripple of the current im about Inom remains small.

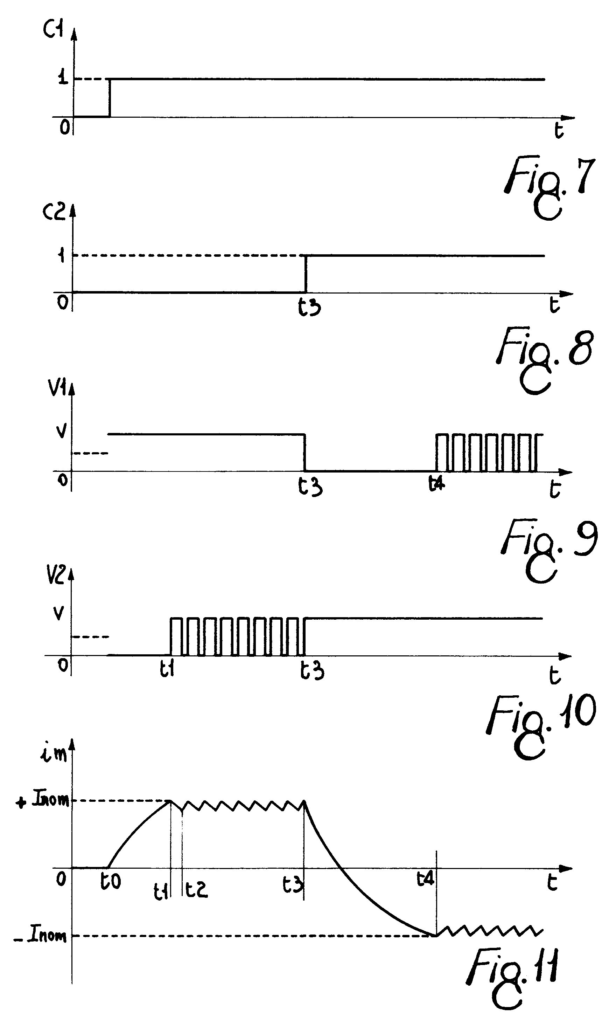

Figure 6 illustrates, purely as a non-restrictive example, a possible embodiment of the equipment according to the block diagram in Figure 5, and the waveforms of the signals associated with the circuit in Figure 6, are shown in Figures 7 to 11.

The equipment in Figure 6 is of the bridge type, and is provided with four switches S1-S2-S3-S4 and four recirculation diodes D, and includes the current sensor Rs in the return branch leading to the power supply source at the voltage V. In turn, the sensor Rs is connected to the control unit CNT which by means of the terminals T1-T2-T3-T4 controls the said switches S1-S2-S3-S4. C1 and C2 indicate the external "enabling" and "direction" commands supplied to the control unit CNT.

It will be seen from Figures 6 and 7 that the enabling command C1 is activated at the instant t0, and since the direction command C2 is low, the control circuit CNT causes the switches S1-S4 to close. The terminal V1 of the head T will thus be connected to the supply potential V, while the terminal V2 will be connected to earth. The current im will flow in the magnetic head in the direction indicated by the arrow P1 and will increase according to the exponential law shown in 14) and as illustrated in Figure 11. At the instant t1, such that tr = t1 - t0, im reaches the nominal value Inom and the sensor Rs signals this to the control circuit CNT which opens the switch S4.

im begins to decrease, following the path indicated by the arrow P3 in Figure 6, and the slope of the curve in Figure 11 which shows this decrease will be very small, since in practice the inductance L has to "discharge" to itself, and this would represent an advantage, since, for the same division frequency, the ripple of im is smaller.

As an alternative to the above, provision may be made for the decrease of im to be obtained by the simultaneous opening of both switches S1-S4, in which case the recirculation current will follow the path indicated in Figure 6 by the arrow P2, and the slope of the curve in Figure 11 will be much greater, since the inductance L will discharge to the voltage generator V. In this case, the following equation is true:

17)    $im = Inom - (1/L) \cdot (\int v \, dt)$

from which it will be seen that as v increases (the maximum is V) the time required for the cancellation of im decreases.

At the instant t2 (Fig. 11), the switch S4, and S1 also if it has been open, are closed again and im begins to increase once again. The instant t2 may be defined by the control system CNT in different ways. A very simple way consists in initiating a monostable pulse of suitable duration whenever im reaches Inom and in interrupting the current flow during such a pulse by means of the switch or switches S1-S4.

Another solution may consist in setting two thresholds of im instead of only one threshold within the control circuit CNT. When im has reached the higher threshold, the switch or switches S1-S4 are opened until im has decreased to the lower threshold. At this point the switches are again closed. The two thresholds will obviously be set in the region of Inom.

Finally, if the curve of im in the range from t1 to t3 is examined in Figure 11, it may be stated with sufficient approximation that im = Inom.

The advantage derived from a current dividing system as shown in Figures 5-6 consists in the absence of components such as resistors, current generators, or others, which operate in a linear region, so that it may be stated that the following equation is true in such a system:

18)    Pd = Pnom

It may therefore be stated that the switching driving system considered here for magnetic heads has an efficiency substantially equal to 100%, since the only power dissipated by the system is that required for the operation of the head T.

In practice, however, it must be considered that neither the switches S1-S2-S3-S4 (generally transistors) nor the recirculation diodes D are "ideal" as has been assumed in the preceding discussion, since they give rise to losses both in conduction and in switching. The equation 18) will not, therefore, be entirely true, but this does not detract from the fact that the efficiency of the system will be very high.

An examination of Figures 8-11 will show that the command C2 relating to the direction of the current is inverted at the instant t3, to record a new data item on the magnetic medium. The control logic CNT in Figure 6 causes switches S1-S4 to open and S2-S3 to close. From this instant im starts to decrease rapidly, since the value of the term v of 17) is as follows:

$$19) \quad v = k = V$$

im will be cancelled rapidly and will reverse its direction, increasing according to an exponential law to the value -Inom, on reaching which im will again be divided by switching, with the opening and closing cycle of one or both switches S2-S3, as previously described for the switch or switches S1-S4.

The switches S1-S2-S3-S4 may form part of chopper circuits, entirely as may be envisaged and easily produced by the expert in the field on the basis of what has previously been stated.

The opening and closing of the switches S1-S2-S3-S4 will be carried out at a frequency such that the system does not generate any electromagnetic disturbances which might degrade the signal written to the magnetic medium by the head T. The switching frequency must therefore be appropriately higher than that of the data recorded on the magnetic medium, and it may easily be determined experimentally.

**Claims**

1. Equipment for driving magnetic heads designed for writing data on a magnetic medium, for example of the so-called bridge type, provided with at least four switches (S1-S2-S3-S4), normally formed by transistors, which determine the direction of flow of the current in the head, and with recirculation diodes (D) which protect the said switches from dangerous excess voltages resulting from their opening and caused by the inductive component (L) of the head, characterised in that it comprises, wholly or partially,
    - a voltage (V) generator which applies a correct potential difference (V) and adequate power across the opposite terminals of the magnetic head (T) by means of the said set of switches (S1-S2-S3-S4) and diodes (D);
    - at least one sensor (Rs) which detects the magnetisation current (im) flowing in the magnetic head, independently of the direction of the said current;
    - at least one control unit (CNT) to whose input are supplied at least two commands, one (C1) being an enabling command and one (C2) corresponding to the direction or sense of flow of the current in the magnetic head, the unit being provided for this purpose with outputs (T1-T2-T3-T4) for driving the flow switches (S1-S2-S3-S4) slaved to the head, while the said control unit is in turn driven by the current sensor (Rs) described in the preceding item;
    - in the control unit (CNT), means of any suitable type being provided to ensure that, when the said current sensor (Rs) detects the flow of a magnetisation current (im) of value equal or substantially equal to the nominal value (+Inom or -Inom) of the head, the said control circuit proceeds to divide the flow of the said current and to maintain it at a substantially constant value, with the cyclic opening and closing, at the correct frequency, of at least one of the switches (S1-S4 or S2-S3) which cause the said current (im) to flow in the direction corresponding to the signal which is being recorded, provision being made to ensure that when the command (C2) corresponding to the direction of flow of the current in the head changes the magnetisation current decreases rapidly, since a voltage equal to the supply voltage (V) of the circuit remains across the terminals of the head, and reaches the nominal value equally rapidly, with its sign changed with respect to the preceding state, after which the flow of the said current is divided under the command of the said current sensor (Rs), the whole operation being performed in such a way that the system thus composed has a very low dissipation, or in other words a high efficiency and a high magnetisation current switching speed.

2. Equipment according to Claim 1), characterised in that the magnetic head supply voltage (V) generator is of the type with a theoretically zero series resistance and is connected directly to the terminals of the said head, without the interposition of current limiters, in such a way that the magnetisation current (im) of the said head rapidly reaches the nominal value (Inom), and by virtue of the possibility of applying to the terminals of the head a voltage (V) suitably greater than the nominal value (Vnom) of the said head.

3. Equipment according to Claim 1), characterised in that, during the division of the magnetisation current (im) of the head, in order to decrease the said current, only one of the two switches (S1-S4 or S2-S3) which were previously conducting is opened, with the purpose of limiting the decrease ramp of the current and of obtaining a limited ripple of the said current about the nominal current value (Inom).

4. Equipment according to Claim 1), characterised in that the division of the head magnetisation current by switching, and the cancellation of the said current when its direction has to be changed, are carried out by the simultaneous opening of both the switches concerned in the flow of the said current, which is consequently forced to pass through a set of devices with low equivalent series resistance, comprising the voltage (V) generator, the whole operation being performed in such a way that the total voltage drop is high and the cancellation of the said current is as rapid as possible.

5. Equipment according to Claim 1), characterised in that, for the division of the head magnetisation current, the command unit (CNT) comprises a monostable circuit, with suitable characteristics, which is activated by the sensor (Rs) detecting the head magnetisation current (im) when this current reaches the nominal value (Inom), this activation being simultaneous with the opening of the switch or switches (S1-S4 or S2-S3) for the division of the said current, and provision being made to ensure that the said switch or switches are closed again when the said monostable circuit changes its state.

6. Equipment according to Claim 1), characterised in that, during the division of the head magnetisation current, the opening and closing of the switch or switches (S1-S4 or S2-S3) is controlled by a double threshold device located in the command unit (CNT) and such that the abovementioned switch or switches are opened when the magnetisation current reaches the high threshold and are closed when the low threshold is reached.

7. Equipment according to Claim 1), in which the frequency of opening and closing of the switch or switches (S1-S4 or S2-S3) for the division of the head magnetisation current (im) is sufficiently high with respect to the message coding frequency and is such that it does not generate electromagnetic modulations which might degrade the signal written by the said

head.

Fig. 1

Fig.2

Fig. 3

Fig. 4

Fig. 5

Fig. 6

Fig. 7

Fig. 8

Fig. 9

Fig. 10

Fig. 11